(19) Europäisches Patentamt
European Patent Office
Office européen des brevets

(11) EP 4 002 222 A1

(12) **EUROPEAN PATENT APPLICATION**

(43) Date of publication:
**25.05.2022  Bulletin 2022/21**

(51) International Patent Classification (IPC):
**G06N 3/08** (2006.01)  **G06N 20/10** (2019.01)
**G06N 20/20** (2019.01)  **G06N 3/10** (2006.01)

(21) Application number: **20208211.1**

(22) Date of filing: **17.11.2020**

(52) Cooperative Patent Classification (CPC):
**G06N 3/08; G06N 3/105;** G06N 5/003; G06N 20/10;
G06N 20/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Amslinger, David
  90419 Nürnberg (DE)**
• **Barrios Dell'Olio, Giuliana
  82194 Gröbenzell (DE)**
• **Büttner, Florian
  81541 München (DE)**
• **Scepanski, Erik
  90402 Nürnberg (DE)**
• **Seitz, Christian
  90425 Nürnberg (DE)**

(54) **TRANSFORMING A TRAINED ARTIFICIAL INTELLIGENCE MODEL INTO A TRUSTWORTHY ARTIFICIAL INTELLIGENCE MODEL**

(57)  The present invention relates to a computerimplemented method and a system for transforming a trained artificial intelligence model into a trustworthy artificial intelligence model, with
- providing the trained artificial intelligence model via a user interface of a webservice platform,
- providing a validation data set, which is based on training data of the trained artificial intelligence model,
- generating generic samples by a computing component of the webservice platform based on the validation data set,
- transforming the trained artificial intelligence model by optimizing a calibration based on the generic samples.

The transformation of the AI model is performed by a computing component of the web service platform. The input, i.e. the trained artificial intelligence model as well as a validation data set, is provided therefor to the computing component via a user interface of the web service platform. Such a user interface can be implemented by any applicable frontend, for example by a web app.

FIG 1

EP 4 002 222 A1

**Description**

The present invention relates to a computerimplemented method and a system for transforming a trained artificial intelligence model into a trustworthy artificial intelligence model.

To facilitate a wide-spread acceptance of artificial intelligence (AI) systems guiding decision making in real-world applications, trustworthiness of deployed models is key. Not only in safety-critical applications such as autonomous driving or Computer-aided Diagnosis Systems (CDS), but also in dynamic open world systems in industry it is crucial for predictive models to be uncertainty-aware and yield well-calibrated - and thus trustworthy - predictions for both in-domain samples ("known unknowns") as well as out-of-domain samples ("unknown unknowns"). In particular, in industrial and IoT settings deployed models may encounter erroneous and inconsistent inputs far away from the input domain throughout the life-cycle. In addition, the distribution of the input data may gradually move away from the distribution of the training data, e.g. due to wear and tear of the assets, maintenance procedures or change in usage patterns etc. The importance of technical robustness and safety in such settings is also highlighted by the recently published "Ethics guidelines for trustworthy AI" by the European Commission (https://ec.europa.eu/digital-single-market/en/news/ethics-guidelines-trustworthy-ai), requiring for trustworthy AI to be lawful, ethical and robust - technically and taking into account its social environment.

In conventional approaches, for each new asset or new environment a new model is trained. However, this is costly, since production has to be stopped during the acquisition of new training data, labeling is expensive and also the procedure of training models comes at a high cost of human and IT resources.

Moreover, statistical methods to detect domain drift based on the input data are known. These methods are highly specific to individual data sets. As known methods are not able to determine the effect of potential data drifts on the accuracy, a retraining of the model as well as a data generation process is necessary.

Common approaches to account for predictive uncertainty include post-processing steps for trained neural networks (NN) and training probabilistic models, including Bayesian and non-Bayesian approaches. However, training such intrinsically uncertainty aware models from scratch comes at a high computational the cost. Moreover, highly specialized knowledge is needed to implement and train such models.

However, while an increasing predictive entropy for an increasingly strong domain drift or perturbations can be an indicator for uncertainty-awareness, simply high predictive entropy is not sufficient for trustworthy predictions. For example, if the entropy is too high, the model will yield under-confident predictions and similarly, if the entropy is too low, predictions will be over-confident.

Considering the described drawbacks in the state-of-the-art, it is therefore an objective of this disclosure to provide a method and corresponding computer program product and apparatus for providing a trustworthy artificial intelligence model.

These objectives are addressed by the subject matter of the independent claims. Advantageous embodiments are proposed in the dependent claims.

The invention relates to a computerimplemented method for transforming a trained artificial intelligence model into a trustworthy artificial intelligence model,

- providing the trained artificial intelligence model via a user interface of a webservice platform,
- providing a validation data set, which is based on training data of the trained artificial intelligence model,
- generating generic samples by a computing component of the webservice platform based on the validation data set,
- transforming the trained artificial intelligence model by optimizing a calibration based on the generic samples.

A conventional trained artificial intelligence (AI) model is provided as an input for the proposed method. Any trained AI model might be used and there is no specific requirement on the training level or on a maturity level or on the accuracy of the model. The higher the quality of the trained model, the easier and faster can the method be performed. Moreover the provided trustworthy artificial intelligence model has a corresponding better quality.

As AI-models, for example AI based classifiers are used. For example, machine learning models might be used, e.g. deep learning-based models, neural networks, logistic regression models, random forest models, support vector machine models or tree-based models with decision trees as a basis might be used according to the application the AI-model is to be used for.

Any set of training data, which has been used to train the model or which has been generated or were collected in order to train the model can be used to extract a validation data set. Thereby the validation data set can be the training data or a sub-set or a part of the training data or can be derived from the training data. The validation data set in particular comprises a set of labelled sample pairs, also referred to as samples.

The transformation of the AI model is performed by a computing component of the web service platform. The input, i.e. the trained artificial intelligence model as well as a validation data set, is provided therefor to the computing component via a user interface of the web service platform. Such a user interface can be implemented by any applicable frontend, for example by a web app.

The validation data set can be provided via the same user interface of the web service platform. Moreover, the training data set can be provided by the user interface and a validation data set is derived from the training data by the computing component.

Based on the validation data set, generic samples are generated. Those generic samples reflect a domain drift, whereby preferably a plurality of generic samples is generated, reflecting different levels or different degrees of domain drift. In other words, a plurality of generic samples is generated representing different strengths of perturbations. Those perturbations can reflect predictable or foreseeable or likely influences on the expected in-domain samples or they can alternatively reflect purely random modifications of the samples or they might further alternative reflect specific intended modifications in the sense of generation of adversarial samples. Thereby, a spectrum ranging from in-domain samples to out-of-domain samples is preferably generated. Samples in more detail are sample pairs. A pair comprises an input object, in particular a vector or matrix, and a desired output value or label, also called the supervisory signal. According to this, the model input can be equally referred to as input object and the model output can be equally referred to as output value or label. The input of a sample from the validation data set is adapted to reflect the domain drift.

Based on the generated generic examples, the calibration is optimized. This can be achieved e.g. within a step of adapting the AI model, especially weights of a neural network, or within the step of postprocessing outputs of an AI model.

Optimizing the calibration based on the generic samples results in an AI model that ensures interpretability for the predicted probabilities for the different classes of a classifier. Optimizing the calibration is in contrast to conventional approaches, where the accuracy is optimized. Moreover, in contrast to conventional approaches, not only adversarial samples in terms of attacks are used, but samples underlying a domain drift, in particular a domain drift with varying perturbation level. Combining the generation of generic samples with an optimization of the calibration based on those generic samples is the differentiator over conventional approaches and leads to the advantages described herein.

The calibration is optimized, so that so-called confidence scores, meaning probabilities for a specific class, match an accuracy. Therefore, a confidence derived from the trustworthy AI model corresponds to a certain degree of certainty.

As the calibration is performed with the help of the generated generic samples, the confidence matches the accuracy for all levels of perturbations which are reflected in the generic samples.

The step of optimizing the calibration therefore links confidence-scores or probabilities with accuracy over the whole range of generic samples. The calibrated trustworthy AI model predicts well-calibrated uncertainties, with the confidence, e.g. the entropy, matching the actual predictive power of the model.

The method enables the transformation of an AI model into a trustworthy AI model by using an uncertainty aware calibration optimization method. The trustworthy AI model determines trustworthy probabilities for both in-domain samples as well as out-of-domain samples.

The trustworthy AI model in embodiments is an adapted model based on the AI model and e.g. adapted in terms of weights of knots within a neural network or in other embodiments is an extended AI model comprising a post-processing algorithm.

In an advantageous manner, overconfident predictions are avoided using the trustworthy AI model obtained with the proposed method. Using the trustworthy AI model, a user knows that when a confidence decreases also the accuracy decreases in a coordinated fashion, so that the user can make an informed decision on when to re-train or replace an AI model. Moreover, in instant feedback on the prediction quality is received by analyzing the accuracy of the trustworthy AI model for given inputs in a real-world scenario. In an advantageous manner, the user instantly knows, whether an AI model can be used for example in a new context, for example a new factory, or whether it needs to be re-trained, potentially saving substantially efforts for unnecessary data collection and model training.

A method is proposed to automatically transform conventional neural networks. For the proposed method, there is no expert scientist necessary to provide custom implementations of modified neural networks. Lay users are enabled to integrate trustworthiness in any machine learning development pipeline. Trustworthy AI is therefore made accessible to a large user base of applied practitioners without expert knowledge.

With the transformation method which optimizes the calibration, the architecture or structure of the AI model is not affected, so that the trustworthy AI model can be deployed directly for the intended use case or application without a further mandatory validation phase. This is the case in particular for transformation methods based on a re-training of the AI model or a postprocessing of the output of the AI model. These characteristics of the method enable the usage as a webservice, so that starting from a pre-trained AI-model, the transformation is offered as a service by a cloud platform in particular.

According to an embodiment, by optimizing the calibration, an uncertainty-awareness is represented in a confidence-level for any of the generic samples. In case, that the AI model realizes a certain level of uncertainty, a predicted classification is equally distributed among the given classes of the classifier. This for example leads to a low and equally distributed confidence score. This is achieved for example by assigning a high entropy in case of an uncertain classification result, and for example via adapting the objective function of the AI model or postprocessing outputs of the AI model.

Depending on the concrete method used for transforming the trained AI model, a re-training of the AI model or a post-processing of outputs of AI model or any further suitable transforming methods are performed. For retraining methods, preferably only a small validation data set is necessary if the trained AI model is a substantially mature trained AI model. In case of only roughly pre-trained AI models, a re-training based on a more comprehensive validation data set is performed preferably. For postprocessing methods, there is no influence on the AI model in terms of structure or architecture, in particular no weights are adapted, so that the trained AI model is preferably provided on a refined level, so that the calibrated trustworthy AI model can be applied after the transformation directly.

According to an embodiment, for generating the generic samples the validation data set is modified by a domain-drift. More specifically, the validation data set is modified by an algorithm representing a domain drift. For example, samples of the validation data set can be modified by adding noise signal. Preferably, the validation data set is modified in a way, that typical drift an industrial environment is represented, for example due to contaminated camera lenses, vibrations, etc.

According to an embodiment, for generating the generic samples the validation data set is modified according to perturbation strengths. With this modification, different levels of perturbations are achieved. Preferably, generic samples are generated that reflect perturbations ranging from typical domain drift within an industrial environment to modifications that reflect truly out of domain samples.

According to an embodiment, transforming comprises applying an entropy-based loss term which encourages uncertainty-awareness. Such an entropy-based loss term is preferably used for a neural network based AI model. Preferably, an entropy loss term is provided in addition to a convenient loss term, e.g. a cross entropy loss term. With these combined loss terms, the neural network is encouraged towards a uniformly distributed softmax output in case of uncertainty.

According to an embodiment, transforming further comprises performing a re-training of the AI-model with applying a calibration loss term. By combining an entropy-based loss term with a calibration loss term, the technical robustness of the model is increased for inputs that are close or similar to the validation data or training data.

According to an embodiment, the following steps are performed:

- computing a categorical cross-entropy loss for the validation data set based on current outputs of the trained AI model and corresponding ground truth data of the validation data set;
- computing a predictive entropy loss by removing non-misleading evidence from the current outputs and distributing the remaining current outputs over a predetermined number of classes;
- computing a combined loss by adding to the categorical cross-entropy loss the predictive entropy loss weighted with a predetermined first loss factor $\lambda_S$, where $0 <= \lambda_S <= 1$;
- checking whether the re-training converged to a predefined lower limit for a convergence rate;
- updating weights of the AI model based on the combined loss and a predetermined training rate $\eta$, where $0 < \eta <= 1$, in case the re-training did not converge; and
- stopping the re-training of the AI model in case the re-training converged.

Encouraging a high entropy with the proposed combined loss term encourages the model towards a uniformly distributed probability distribution, for example the output of the softmax function, in case of uncertainty.

According to an embodiment, further the following steps are performed:

- generating perturbed outputs of the for the generic samples by forward propagating the generic input data of the generic samples in the AI model;
- computing a calibration loss as the Euclidian norm of an expected calibration error, which takes a weighted average over the perturbed outputs grouped in a predefined number of equally spaced bins each having an associated average confidence and accuracy;
- checking whether the re-training converged to a predefined lower limit for a convergence rate;
- first time updating weights of the AI model based on the combined loss and a predetermined training rate $\eta$, where $0 < \eta <= 1$, in case the training did not converge;
- second time updating the weights of the AI model based on the calibration loss weighted with a predetermined second loss factor $\lambda_{adv}$, where $0 <= \lambda_{adv} <= 1$, and the predetermined training rate $\eta$, in case the training did not converge; and
- stopping the training of the in case the training converged.

With the proposed calibration loss term, the technical robustness of the AI model increases for inputs built of the validation data set or training samples of the validation data set and underlying a variety of perturbation levels.

According to an embodiment, the artificial intelligence model is a neural network.

An embodiment with combined loss term and calibration loss term is described in more detail. A computer-implemented method of re-training a neural network in order to transform a trained neural network into a trustworthy neural network comprises the steps of receiving a validation data set T of validation input data $X = (X_1, ..., X_n)$ and corresponding ground truth data $Y = (Y_1, ..., Y_n)$ for a predetermined number C of classes. Thereby, n is greater than one (n > 1) and C is greater than or equal to one (C >= 1). The step of re-training the neural network comprises the iterative training steps selecting a validation sub-set, generating current outputs, computing a categorical cross-entropy loss, computing a predictive entropy loss, computing a combined loss, providing a perturbation level, generating a generic sample set, generating perturbed outputs, computing a calibration loss, checking whether the training converged, first time updating weights, second time updating the weights and stopping the training. In the training step of selecting a validation sub-set, a validation sub-set B of validation input data $X_B$ and corresponding ground truth data $Y_B$ is selected from the validation set T. Thereby, the cardinal number of the validation sub-set is greater than zero and smaller than the cardinal number of the validation set (0 < |B| < |T|).

In the re-training step of generating current outputs, current outputs of the neural network for the sub-set B are generated by forward propagating the validation input data $X_B$ of the training sub-set B in the neural network. In the re-training step of computing a categorical cross-entropy loss, a categorical cross-entropy loss $L_{CCE}$ for the sub-set B is computed based on the current outputs and the corresponding ground truth data $Y_B$ of the training sub-set B. In the re-training step of computing a predictive entropy loss, a predictive entropy loss $L_S$ is computed by removing non-misleading evidence from the current outputs and distributing the remaining current outputs over the predetermined number C of classes. In the re-training step of computing a combined loss, a combined loss L is computed by adding to the categorical cross-entropy loss $L_{CCE}$ the predictive entropy loss $L_S$ weighted with a predetermined first loss factor $\lambda_S$. Thereby, the first loss factor $\lambda_S$ is greater than or equal to zero and smaller than or equal to 1 (0 <= $\lambda_S$ <= 1).

In the re-training step of providing or sampling a perturbation level, a perturbation level $\varepsilon_B$ is randomly sampled with a value from 0 to 1. In the re-training step of generating an generic sample set, a generic sample set $B_g$ of generic input data $X_g$ is generated by applying a perturbation randomly selected from a predefined set of perturbations and weighted with the perturbation level $\varepsilon_B$ to the validation input data $X_B$ of the validation sub-set B. Thereby the cardinal number of the generic input data is equal to the cardinal number of the validation input data of the validation sub-set ($|X_{adv}| = |X_B|$). In the re-training step of generating perturbed outputs, perturbed outputs of the neural network for the generic sample set $B_g$ are generated by forward propagating the generic input data $X_g$ of the generic sample set $B_g$ in the neural network in the training step of computing a calibration loss, a calibration loss $L_g$ is computed as the Euclidian norm ($L_2$ norm) of an expected calibration error ECE. The expected calibration error ECE takes a weighted average over the perturbed outputs grouped in a predefined number M of equally spaced bins each having an associated average confidence and accuracy. Thereby the predefined number M is greater than one (M > 1).

In the re-training step of checking whether the training converged, it is checked whether the training converged to a predefined lower limit for a convergence rate. In the step of first time updating weights, weights of the neural network are updated first time based on based on the combined loss L and a predetermined training rate $\eta$, where the predetermined training rate $\eta$ is greater than zero and smaller than or equal to one (0 < $\eta$ <= 1), in case the training did not converge.

In the step of second time updating weights, weights of the neural network are updated second time based on the calibration loss $L_g$ weighted with a predetermined second loss factor $\lambda_g$, where the predetermined second loss factor $\lambda_g$ is greater than or equal to zero and smaller than or equal to one (0 <= $\lambda_{adv}$ <= 1), and the predetermined training rate $\eta$, in case the training did not converge. In the step of stopping the training, the training of the neural network is stopped in case the training converged.

The received validation data set T also comprises the corresponding ground truth data Y. The ground truth data Y comprises multiple samples of ground truth data $Y_1$ to $Y_n$ that corresponds to the respective samples of the validation input data $X_1$ to $X_n$. The corresponding ground truth data gives the information that is to be deduced by the neural network.

Each pair of sample of validation input data and corresponding sample of ground truth data $X_1, Y_1$ to $X_n, Y_n$ belongs to one of the classes.

For example, the samples of validation input data $X_1$ to $X_n$ may be different images showing handwritten numbers and the corresponding samples of ground truth data $Y_1$ to $Y_n$ may be the respective number that is to be deduced by the neural network. The classes may be C = 10 classes where each class represents one number (0 to 9). Here the C = 10 classes could be one-hot encoded in the following way:

    0 corresponds to 1 0 0 0 0 0 0 0 0 0
    1 corresponds to 0 1 0 0 0 0 0 0 0 0
    2 corresponds to 0 0 1 0 0 0 0 0 0 0
    3 corresponds to 0 0 0 1 0 0 0 0 0 0
    4 corresponds to 0 0 0 0 1 0 0 0 0 0
    5 corresponds to 0 0 0 0 0 1 0 0 0 0

6 corresponds to 0 0 0 0 0 0 1 0 0 0

7 corresponds to 0 0 0 0 0 0 0 1 0 0

8 corresponds to 0 0 0 0 0 0 0 0 1 0

9 corresponds to 0 0 0 0 0 0 0 0 0 1

As another example, the samples of validation input data $X_1$ to $X_n$ may be different medical image data like Magnetic Resonance images, Computer Tomography images, Sonography images etc. and the corresponding samples of ground truth data $Y_1$ to $Y_n$ may be respective maps where each pixel or voxel of the medical image data is assigned a different type of tissue or organ that is to be deduced by the NN. The classes may be C = 3 classes where each class represents one type of tissue. Here the C = 3 classes could be one-hot encoded in the following way:

normal tissue corresponds to      1 0 0

tumorous tissue corresponds to    0 1 0

fibrous tissue corresponds to     0 0 1

Alternatively, the classes may be C = 4 classes where each class represents one type of organ. Here the C = 4 classes could be one-hot encoded in the following way:

lung tissue corresponds to     1 0 0 0

heart tissue corresponds to    0 1 0 0

bone corresponds to            0 0 1 0

other tissue corresponds to    0 0 0 1

As another example, the samples of validation input data $X_1$ to $X_n$ may be data of varying courses of different physical quantities like force, temperature, speed etc. and the corresponding samples of ground truth data $Y_1$ to $Y_n$ may be respective state of a machine that is to be deduced by the neural network. The classes may be C = 3 classes where each class represents one state of the machine. Here the C = 3 classes could be one-hot encoded in the following way:

normal operation corresponds to     1 0 0

start-up phase corresponds to       0 1 0

failure corresponds to              0 0 1

As another example, the samples of validation input data $X_1$ to $X_n$ may be texts regarding different topics like politics, sports, economics, science etc. and the corresponding samples of ground truth data $Y_1$ to $Y_n$ may be the respective topic that is to be deduced by the neural network. The classes may be C = 4 classes where each class represents one topic. Here the C = 4 classes could be one-hot encoded in the following way:

politics corresponds to       1 0 0 0

sports corresponds to         0 1 0 0

economics corresponds to      0 0 1 0

science corresponds to        0 0 0 1

According to an embodiment, transforming comprises post-processing an output of the AI model. Advantageously, when performing a post-processing, the AI model does not have to be retrained in order to be transformed into the trustworthy AI model. Therefore, the AI model does not have to be provided detailed architectural information. That means that even black box classifiers can be transformed with the proposed method. The step of post-processing itself can be interpreted as a step of learning a post-processing-model and is not to be mixed with the training of the AI model provided by the user of the webservice platform.

The post-processing can be parametric or non-parametric. An example of a parametric post-processing method is Platt's method that applies a sigmoidal transformation that maps the output of a predictive model to a calibrated probability output. The parameters of the sigmoidal transformation function are learned using a maximum likelihood estimation framework. The most common non-parametric methods are based either on binning (Zadrozny and Elkan 2001) or isotonic regression (Zadrozny and Elkan 2002). For example, histogram binning is used introduced by Naeini, M. P., Cooper, G. F., & Hauskrecht, M. (2015, January) for obtaining well calibrated probabilities using bayesian binning.

For the post-processing, again generic samples are generated and fed into the trained AI model. The output of the trained AI model impinged with the generic samples is then calibrated.

In an embodiment, a set of samples covering the entire spectrum from in-domain samples to truly out-of-domain samples in a continuous and representative manner is generated. For example, the fast gradient sign method is applied to the validation data set to generate generic samples, with varying perturbation strength. More specifically, for each sample in the validation set, the derivative of the loss with respect to each input dimension is computed and the sign of this gradient is recorded. If the gradient cannot be computed analytically, e.g. for decision trees, a 0th-order approximation is performed, computing the gradient using finite differences. Then noise $\varepsilon$ is added to each input dimension in the direction of its gradient.

Preferably, for each sample, a noise level is picked at random, such that the generic validation set comprises representative samples from the entire spectrum of domain drift. For image data affine image transformations are applied, e.g. rotation, translation, etc., and image corruptions, like blur, speckle noise, etc.

According to an embodiment, during the step of post-processing, parameters of a monotonic function used to transform unnormalized logits are determined by optimizing a calibration metric based on the generic samples. For example, a strictly monotonic function, in particular a piecewise temperature scaling function or a platt scaling function or other related parameterizations of a monotonic function, is used to transform unnormalized logits of a classifier into post-processed logits of the classifier. The parameters of the function, e.g. the temperatures, are then determined by optimizing a calibration metric based on the generic samples. Such calibration metrics are for example the log likelihood, the Brier score, Nelder Mead or the expected calibration error. Performing e.g. the temperature scaling, i.e. learning the temperature, based on the generic samples and not based on the validation data set (or training data set) results in a well-calibrated AI model, extended in order to comprise a post-processing step, under domain shift.

Another advantage is that the method has no negative effect on the accuracy. The method ensures that the classifier is well calibrated not only for in-domain predictions but yields well calibrated predictions also under domain drift.

Method according to, wherein the artificial intelligence model is a classifier, in particular one of deep neural network, gradient boosted decision tree, xgboost, support vector machine, random forest and neural network.

According to an embodiment, the validation data set is a sub-set of the training data of the trained artificial intelligence model. Preferably, a user only has to provide this sub-set of the training data and does not have to provide an entire training data set.

According to an embodiment, the validation data set is generated by modifying the training data of the trained artificial intelligence model. The method step of modifying the training data to generate the validation data that can be part of method steps performed by the computing unit of the web service platform or can be performed in advance, so that a user only provides the validation data set via the user interface.

According to an embodiment, the transformed artificial intelligence model is provided via the user interface of the webservice platform, in particular as downloadable file. In an advantageous manner, the user inputs a not necessarily trustworthy AI model and receives a transformed trustworthy AI model.

The invention moreover relates to a computer program product comprising instructions which, when executed by a computing component, cause the computing component to carry out the method according to one of the preceding claims. The computing component for example is a processor and for example is connectable to a human machine interface. The computer program product may be embodied as a function, as a routine, as a program code or as an executable object, in particular stored on a storage device.

The invention moreover relates to a system for transforming a trained artificial intelligence model into a trustworthy artificial intelligence model, comprising:

- a user interface component to enable provision of the trained artificial intelligence model,
- a memory storing the trained artificial intelligence model and user assignment information,
- a computing component for generating generic samples based on a validation data set, wherein the validation data set is determined based on training data of the trained artificial intelligence model, and for transforming the trained artificial intelligence model by optimizing a calibration based on the generic samples.

For example, the computing component may comprise a central processing unit (CPU) and a memory operatively connected to the CPU.

Advantageously, the system enables lay users to transform their pre-trained AI model into a trustworthy AI model within a detachable step, including the option to use the system anytime, for example flexibly after a retraining phase of the trust with the calibrated AI model, which has for example be necessary due to changed applications or scenarios the AI model is used for.

According to an embodiment, the user interface of the system is accessible via a web service. This enables the user to flexibly provide the AI model and corresponding training data or validation data. The user has a transparent overview of the extent to which data and information about the AI model and corresponding data is provided.

According to an embodiment, the memory and the computing component are implemented on a cloud platform.

This enables a flexible adaption to the extent the web service is requested, in particular in terms of computing power.

Moreover, customer specific requirements in terms of server locations can be flexibly handled with the usage of a cloud computing platform.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

In the following different aspects of the present invention are described in more detail with reference to the accompanying drawings.

Figure 1    A schematic representation of a system according to first embodiment;

Figure 2    a schematic flow chart diagram of a method corresponding to a second embodiment;

Figure 3    a schematic diagram of an output of an AI model according to the state of the art;

Figure 4    a schematic diagram of an output of a trustworthy AI model according to a third embodiment.

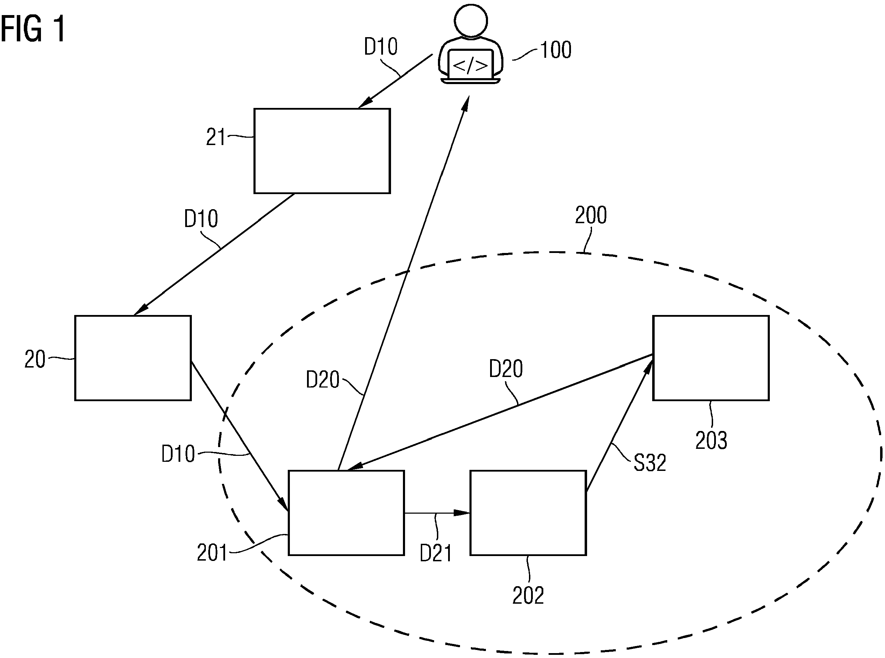

The first embodiment refers to the web service details of the proposed method. A transformation method for a trained AI model is described as part of a web service, which is accessible via a webpage. The method is illustrated with figure 1, which is described in more detail in the following.

A user 100 for example accesses a webpage. The front end 20 of the webpage is for example realized via a web app, e.g. Elastic Beanstalk, which fetches an AWS EC2 instantiation. The web app askes the user 100 to upload a trained neural network, for example with weights exported in a pre-specified format, e.g. hdf5. In addition, it askes to provide a representative validation data set. These user data D10 is provided by the user 100 via the user interface and front end 20, which forwards it to a cloud platform 200.

According to the first embodiment, there is an additional authentication step realized with an authentication infrastructure 21, so that the user 100 is reliably identified and authenticated. For example, an e-mail address with password is used to register before the user 100 can upload the data. The user data D10 is therefore enhanced with user authentication information.

Within the cloud platform 200, a memory 201, e.g. a memory provided by AWS S3, a web-based Cloud Storage Service, saves the uploaded user data D10. An event within the AWS S3, which indicates the request for a transformation, is sent as notification D21 to a so-called Lambda function as trigger 202 for the actual transformation method.

The Lambda function is configured so that it calls suitable transformation methods, which are arranged in containers and called depending on the user data D10. For example, the user data D10 also comprises an information about which transformation method is desired, e.g. a post-processing or a re-training, or about requirements in terms of delivery time etc.

The trigger 202, in this embodiment the Lambda function, starts for example a data processing-Engine for containers, e.g. AWS Fargate, with a trigger call S32 and provides user data location. The AI model transformation then is performed in the backend 203, for example with a container-orchestration service like AWS ECS, where the Fargate container is executed.

As a result of this transformation, the trustworthy AI model is generated with the method explained in detail in the various embodiments above.

The transformation of the AI model as web service is enabled due to the characteristics of the transformation method, in particular the dependence on the generated generic samples, where only a validation data set is necessary as input, and moreover the usage of a calibration optimization, which does not affect the architecture or structure of the AI model, so that a deployment of the trustworthy AI model on user side is guaranteed.

The trustworthy AI model as well as corresponding process protocols are saved as transformation result D20 in the memory 201 and finally provided to the user 100. This happens for example via an AWS S3 event that sends the transformation result D20 directly to the e-mail address of the authenticated user 100, which has been saved in the memory 201.

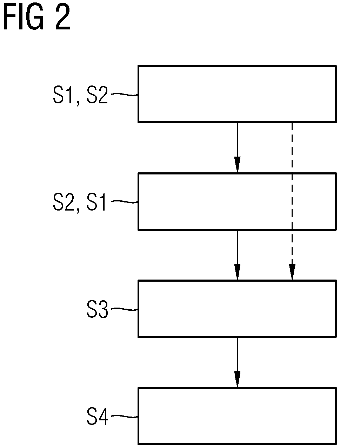

Figure 2 shows a schematic flow chart diagram of a method, with the steps of providing S1 the trained artificial intelligence model via a user interface of a webservice platform, providing S2 a validation data set, which is based on training data of the trained artificial intelligence model, generating S3 generic samples by a computing component of the webservice platform based on the validation data set, transforming S4 the trained artificial intelligence model by optimizing a calibration based on the generic samples.

The steps S1 and S2 of providing the trained artificial intelligence model and the validation data set might be performed decoupled of each other and in a flexible order, as indicated by the exchangeable reference signs in figure 2. In other embodiments, they can be combined and performed within one method step or simultaneously, as indicated by the dotted arrow.

The step of transforming the trained artificial intelligence model is explained in more detail.

A cross entropy loss term is defined as

$$\mathcal{L}_j = \sum_{j=1}^{K} -y_{ij} \log(p_{ij})$$

and a uniform loss term as

$$\mathcal{L}_{uniform_i} = \lambda_t \sum_{j=1}^{K} -\frac{1}{K} \log(p_{ij}(1 - y_{ij}) + y_{ij})$$

with p being the prediction, y a label, $\lambda_t$ an annealing coefficient, t an index of a training step, i an index of a sample, j an index of a class and K the number of classes. This term encourages the model towards a uniformly distributed softmax output in case of uncertainty.

A calibration loss term is defined as

$$\mathcal{L}_{ECE_i} = \left\| ECC_{gen_i} \right\|_2^2$$

$$ECE = \sum_{m=1}^{M} \frac{|B_m|}{n} |acc(B_m) - conf(B_m)|$$

with $ECC_{gen}$ being the ECE on the generic samples, with $B_m$ being the set of indices of samples whose prediction confidence falls into its associated interval $I_m$. **$conf(B_m)$** and **$acc(B_m)$** are the average confidence and accuracy associated to **$B_m$** respectively, n the number of samples in the dataset, M a number of bins and m an index of bins. With this calibration loss term, which could be seen as generic calibration loss term, the technical robustness of the AI model for input around an epsilon-neighborhood of the training samples is increased.

These three loss terms are combined for retraining the AI model. As a result of the re-training, the trained AI model has been transformed into a trustworthy AI model, which yields confidence scores matching the accuracy for samples representing a domain shift, in particular gradually shifting away from samples of the validation data set.

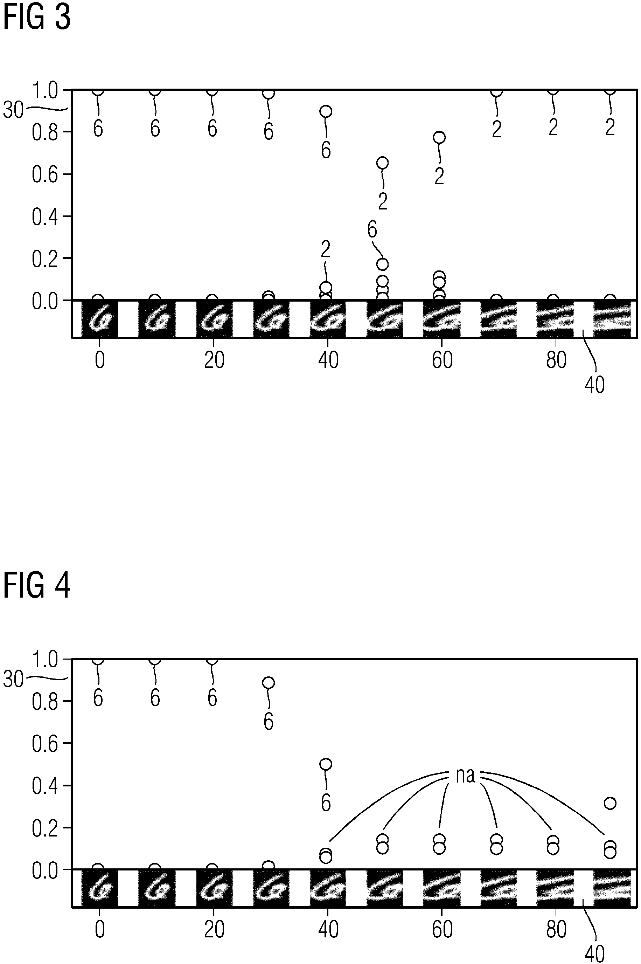

Figure 3 illustrates a result of an AI model according to the state of the art, showing a schematic diagram of an output of a classifier. On the vertical axis 30 of the diagram, the confidence scores are shown, on the horizontal axis 40, the discrete input data is shown. From left to right, the quality of the input data, here in form of a handwritten figure "6", decreased due to a distortion in one direction. Those kinds of distortion reflect effects on data input in real life scenarios, which impede accurate prediction of the classifier.

The classifier is trained to assign one of 10 classes to the input data, corresponding to figures 0-9.

As one can see, starting at about a range of perturbation of 50, which represents a flexible and arbitrary scale to group distortions and might be a value of epsilon, which has been introduced in the description above, the classifier starts to predict a wrong classification result, "2" in this case, but with a high confidence score over 60%, even increasing with increasing epsilon up to almost 100%. This illustrates an over-confident classifier when data with domain shift is to be classified.

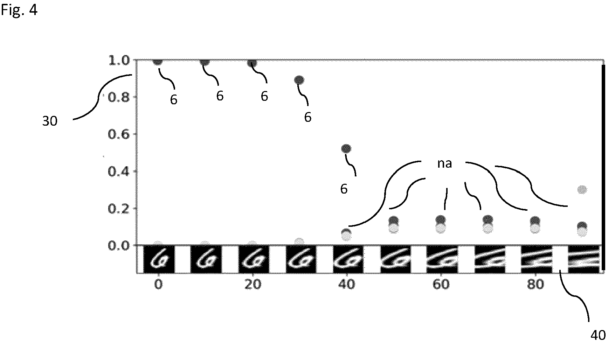

According to the third embodiment, which is illustrated in figure 4, the same classifier is used, but the underlying AI classification model has been transformed into a trustworthy AI model with the following method.

A set of samples are generated which cover the entire spectrum from in-domain samples to truly out-of-domain samples in a continuous and representative manner. According to this, the fast gradient sign method (FGSM) is used on the basis of the validation data set with sample pairs to generate perturbated samples, with varying perturbation strength. More specifically, for each sample pair in the validation data set, the derivative of the loss is determined with respect to each input dimension and the sign of this gradient is recorded. If the gradient cannot be determined analytically (e.g. for decision trees), it can be resorted to a 0th -order approximation and the gradient can be determined using finite differences. Then, noise $epsilon$ is added to each input dimension in the direction of its gradient. For each sample pair, a noise level can be selected at random, such that the generic data set comprises representative samples from the entire spectrum of domain drift, as shown in the pseudo code of algorithm 1 and explanation.

```
    \begin{algorithm} [H]
        \caption{PORTAL with trained neural network $f(x)$, a
 set of perturbation levels $\mathcal{E}=\{
 0.001,0.002,0.004,0.008,0.016,0.032,0.064,0.128,0.256,0.512\}
 $ , complexity parameter $\zeta=1$, validation set $(X, Y)$,
 and empty perturbed validation set
 $(X_\mathcal{E},Y_\mathcal{E}, Z_\mathcal{E},
 Z^r_\mathcal{E})$.
        }\label{alg1}
        \begin{algorithmic}[1]
        \For{(x, y) in (X,Y)}
            \For{$\epsilon\; \mathrm{in}\;\mathcal{E}$}
                \State Generate generic sample $x_\epsilon$ us-
 ing $\epsilon_\zeta=\epsilon/\zeta$
                \State Use neural network $f(x_\epsilon)$ to
 compute unnormalized logits $\bm{z_\epsilon}$ and logit range
 $z_\epsilon^r$
                \State Add $(x_\epsilon, y, \bm{z_\epsilon},
 z_\epsilon^r)$ to $(X_\mathcal{E},Y_\mathcal{E},
 Z_\mathcal{E}, Z^r_\mathcal{E})$
            \EndFor
        \EndFor
        \State Initialize $\bm{\theta}$
        \State Optimize $\bm{\theta}$ using Nelder-Mead op-
 timizer for log-likelihood of perturbed validation set
 $\mathcal{L}(\bm{\theta}) = - \sum_{i=1}^{N_\mathcal{E}} y_i
 \log \hat{Q}_i(\bm{\theta}) = - \sum_{i=1}^{N_\mathcal{E}}
 y_i \log \sigma_{SM}(\mathbf{z}_i/T(z^r_i;\bm{\theta}))$
        \end{algorithmic}
    \end{algorithm}
```

**Algorithm 1** Generation of generic data set $V_g$ based on validation $V$, consisting of a collection of labelled samples $\{(x, y)\}$, with $x$ being model inputs an $y$ model outputs. $N$ denotes the number of samples in $V$, $\mathcal{E} = \{0, 0.05, 0.1, 0.15, 0.2, .025, 0.3, 0.35, 0.4, 0.45\}$ the set of perturbation levels.

**Require:** Validation set $V$ and empty generic data set $V_g$
1: **for** i in 1:N **do**
2:    Read sample pair $(x_i, y_i)$ from $V$

```
3:    Randomly sample ϵ_i from 𝓔
4:    Generate generic sample pair (x_g,y) using the FGSM method
based on ϵ_i
5:    Add (x_g,y) to V_g
6: end for
```

$x_g$ denotes a generic input generated from x using the FGSM method.

According to an alternative embodiment, the formulation of Algorithm 1 differs in that not only one generic sample is generated per sample pair; but instead FGSM is applied for all available epsilons. Thereby the size of the generic data set can be significantly increased by the size of the set of epsilons. In other words, different perturbation strategies can be used e.g. based on image perturbation. The advantage is that the method according to the invention can be applied on black box models where it is not possible to compute the gradient.

Next, a strictly monotonic parameterized function is used to transform the unnormalized logits of the classifier. For example, Platt scaling, temperature scaling, other parameterizations of a monotonic function, or non-parametric alternatives can be used. In an embodiment according to the following equation a novel parameterization is used, which adds additional flexibility to known functions by introducing range-adaptive temperature scaling. While in classical temperature scaling a single temperature is used to transform logits across the entire spectrum of outputs, a range-specific temperature is used for different value ranges.

The following is a formula of a preferred embodiment:

$$T(z^r; \boldsymbol{\theta}) = \exp\_id \left( \frac{\theta_1}{(z^r + \theta_2)^{\theta_3}} + \theta_0 \right) \tag{5}$$

with $\theta = [\theta_0 \dots \theta_3]$ parameterizing the temperature $T(z^r; \theta)$ and $z_r = \max(z) - \min(z)$ being the range of an unnormalized logits tuple $z$. $\theta_0$ can be interpreted as an asymptotic dependency on $z^r$. The following function an be used $\exp\_id : x \to \{x + 1, x > 0; \exp(x), \text{else}\}$ to ensure a positive output. This parameterized temperature is then used to obtain calibrated confidence scores $\hat{Q}_i$ for sample $i$ based on unnormalized logits:

$$\hat{Q}_i = \max_c \sigma_{SM}(z_i / T(z_i^r; \boldsymbol{\theta}))^{(c)} \tag{6}$$

$$\int c, T : \mathbb{R} \to \mathbb{R}$$

$$\int c, T : x \to \begin{cases} \frac{x}{|T_1|} & \text{if } x < C_1 \\ \frac{x - C_{h-1}}{|Th|} + \sum_{l=1}^{h-1} \frac{C_l - C_{l-1}}{|Tl|} & \text{if } C_{h-1} \le x < C_h, \quad h = 2, \dots, H \end{cases}$$

$$\text{with } H := dim(T)$$
$$c_0 := 0,$$
$$c_H := \infty$$

Sigma_SM denotes the softmax function. The parameters of the function (theta) are then determined by optimizing a calibration metric based on the generic data set. Calibration metrics can be the log likelihood, the Brier score or the expected calibration error, see also Algorithm 2.

**Algorithm 2** Fit parameterized post-processing model $\mathbf{u} = \int(\mathbf{z}, T)$, where $\int$ is a strictly monotonic function parameterized by parameters $T$ and maps the unnormalized logits $\mathbf{z} = C(x)$ of a classifier $C$ to transformed (still unnormalized) logits $\mathbf{u}$. Let $g$ denote a calibration metric that is used to compute a scalar calibration measure $w$ based on a set of logits along with ground truth labels.

**Require:** Generic set $V_g$ (from algorithm 1), function $\int$ with initial parameters $T$, calibration metric $g$.

1: **repeat**

2:    Read sample pairs $\{(x_g, y)\}$ from $V_g$. Let $Y$ be the set of all labels.

3:    Compute post-processed logits $\mathbf{u} = \int(\mathbf{z}, T)$ for all $\mathbf{z} = C(x_{adv})$, comprising set $\mathbf{U}$.

4:    Perform optimization step and update $T$ to optimize $g(\mathrm{U}, Y)$

5: **until** Optimisation converged

6: **return** Optimized $T$

In an alternative embodiment of a blackbox classifier where logits are not available, Algorithm 2 can be adapted such that unnormalized logits are generated by computing z = log(C(x)). Optimizers can be advantageously be selected according to the form of the metric (e.g. Nelder Mead for piecewise temperature scaling) in a flexible manner.

After the trained AI classification model has been transformed with the method described, the same input data as used in connection with the state of the art model from figure 3 is now used to be classified by the trustworthy AI classification model. As one can see from figure 4, up to a perturbation level of 20, the right class "6" is predicted with the same high confidence as predicted with the prior art method. The confidence level decreases slightly from almost 100% to about 80% for a perturbation level of 30. For 40, there is already a confidence level for the predicted class of only around 50%, so that there is a clear indication, that the prediction is subject to uncertainty. Up from epsilon 50, the trustworthy AI classifier gives a prediction rate of about 10% for essentially all classes na. This translates to a result "no classification possible with sufficient certainty", so that all of the ten classes might be the correct prediction, leading to a confidence score of 1/10 or 10%.

The transformed trustworthy AI model can in an advantageous manner be used be a non-expert user in an application for AI-based classifying also in safety-critical applications, where a timely recognition of decreasing accuracy for prediction also for input data under domain drift is key and over-confident estimates have to be avoided.

Although the present invention has been described in accordance with preferred embodiments, it is obvious for the person skilled in the art that modifications are possible in all embodiments.

**Claims**

1.    Computerimplemented method for transforming a trained artificial intelligence model into a trustworthy artificial intelligence model,

- providing (S1) the trained artificial intelligence model via a user interface of a webservice platform,
- providing (S2) a validation data set, which is based on training data of the trained artificial intelligence model,

- generating (S3) generic samples by a computing component of the webservice platform based on the validation data set,
- transforming (S4) the trained artificial intelligence model by optimizing a calibration based on the generic samples.

2. Method according to one of the preceding claims, wherein by optimizing the calibration, an uncertainty-awareness is represented in a confidence-level for any of the generic samples.

3. Method according to claim 1 or 2, wherein for generating (S3) the generic samples the validation data set is modified by a domain-drift.

4. Method according to one of the preceding claims, wherein for generating (S3) the generic samples the validation data set is modified according to perturbation strengths.

5. Method according to one of the preceding claims, wherein transforming (S4) comprises performing a re-training of the AI-model with applying an entropy-based loss term which encourages uncertainty-awareness.

6. Method according to claim 5, wherein transforming (S4) further comprises applying a calibration loss term.

7. Method according to claim 5 or 6, comprising the steps of:

  - generating current outputs of the AI model for the validation data set by forward propagating validation input data ($X_B$) of the validation data set in the AI model;
  - computing a categorical cross-entropy loss $L_{CCE}$ for the validation data set based on the current outputs and corresponding ground truth data ($Y_B$) of the validation data set;
  - computing a predictive entropy loss $L_S$ by removing non-misleading evidence from the current outputs and distributing the remaining current outputs over a predetermined number C of classes;
  - computing a combined loss L by adding to the categorical cross-entropy loss $L_{CCE}$ the predictive entropy loss $L_S$ weighted with a predetermined first loss factor $\lambda_S$, where $0 <= \lambda_S <= 1$;
  - checking whether the re-training converged to a predefined lower limit for a convergence rate;
  - updating weights of the AI model based on the combined loss L and a predetermined training rate $\eta$, where $0 < \eta <= 1$, in case the re-training did not converge; and
  - stopping the re-training of the AI model in case the re-training converged.

8. Method according to claim 7, further comprising the steps of:

  - generating perturbed outputs of the AI model for the generic samples by forward propagating the generic input data $X_{adv}$ of the generic samples in the AI model;
  - computing a calibration loss $L_{adv}$ as the Euclidian norm, $L_2$ norm, of an expected calibration error ECE, which takes a weighted average over the perturbed outputs grouped in a predefined number M of equally spaced bins each having an associated average confidence and accuracy, where $M > 1$;
  - checking whether the re-training converged to a predefined lower limit for a convergence rate;
  - first time updating weights of the AI model based on the combined loss L and a predetermined training rate $\eta$, where $0 < \eta <= 1$, in case the training did not converge;
  - second time updating the weights of the AI model based on the calibration loss $L_{adv}$ weighted with a predetermined second loss factor $\lambda_{adv}$, where $0 <= \lambda_{adv} <= 1$, and the predetermined training rate $\eta$, in case the training did not converge; and
  - stopping the training of the AI model in case the training converged.

9. Method according to one of claims 5-7, wherein the artificial intelligence model is a neural network.

10. Method according to one of claims 1-4, wherein transforming (S4) comprises post-processing an output of the AI model.

11. Method according to claim 10, wherein during the step of post-processing, parameters of a monotonic function used to transform unnormalized logits are determined by optimizing a calibration metric based on the generic samples.

12. Method according to claims 10 or 11, wherein the artificial intelligence model is a classifier, in particular one of deep

EP 4 002 222 A1

neural network, gradient boosted decision tree, xgboost, support vector machine, random forest and neural network.

13. Method according to one of the preceding claims, wherein the validation data set is a sub-set of the training data of the trained artificial intelligence model.

14. Method according to one of the preceding claims, wherein the validation data set is generated by modifying the training data of the trained artificial intelligence model.

15. Method according to one of the preceding claims, wherein the transformed artificial intelligence model is provided via the user interface of the webservice platform, in particular as downloadable file.

16. Computer program product comprising instructions which, when executed by a computing component, cause the computing component to carry out the method according to one of the preceding claims.

17. System for transforming a trained artificial intelligence model into a trustworthy artificial intelligence model, comprising:

   - a user interface component (20) to enable provision of the trained artificial intelligence model,
   - a memory (201) storing the trained artificial intelligence model and user assignment information,
   - a computing component (203) for generating generic samples based on a validation data set, wherein the validation data set is determined based on training data of the trained artificial intelligence model, and for transforming the trained artificial intelligence model by optimizing a calibration based on the generic samples.

18. System according to claim 17, wherein the user interface component (20) is accessible via a webservice.

19. System according to claims 17 or 18, wherein the memory and the computing component are implemented on a cloud platform (200).

FIG 1

EP 4 002 222 A1

FIG 2

S1, S2

S2, S1

S3

S4

FIG 3

FIG 4

Fig. 4

Europäisches
Patentamt

European
Patent Office

Office européen
des brevets

# EUROPEAN SEARCH REPORT

**Application Number**

EP 20 20 8211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LINGKAI KONG ET AL: "Calibrated Language Model Fine-Tuning for In- and Out-of-Distribution Data", ARXIV.ORG, CORNELL UNIVERSITY LIBRARY, 201 OLIN LIBRARY CORNELL UNIVERSITY ITHACA, NY 14853, 22 October 2020 (2020-10-22), XP081793118, * abstract * * sections 1, 3, 5 * | 1-19 | INV. G06N3/08 G06N20/10 G06N20/20 G06N3/10 |
| X | KIMIN LEE ET AL: "Training Confidence-calibrated Classifiers for Detecting Out-of-Distribution Samples", ARXIV.ORG, CORNELL UNIVERSITY LIBRARY, 201 OLIN LIBRARY CORNELL UNIVERSITY ITHACA, NY 14853, 26 November 2017 (2017-11-26), XP081319903, * abstract * * sections 2.1-2.3 * * appendix C * | 1-19 | |

**TECHNICAL FIELDS SEARCHED (IPC)**

G06N

The present search report has been drawn up for all claims

| Place of search | Date of completion of the search | Examiner |
|---|---|---|
| The Hague | 6 May 2021 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 002 222 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Ethics guidelines for trustworthy AI. *European Commission, https://ec.europa.eu/digital-single-market/en/news/ethics-guidelines-trustworthy-ai*